# EUROPEAN PATENT APPLICATION

(11) **EP 4 366 028 A1**
(43) Date of publication of application: **08.05.2024**
(21) Application number: 22942095.5
(22) Date of filing: 19.05.2022
(51) Int. Cl.: H01M 10/44, H01M 10/615

(54) **BATTERY DISCHARGING METHOD AND APPARATUS**

(71) Applicant: Contemporary Amperex Technology Co., Limited, Ningde, Fujian 352100 (CN)
(72) Inventor: FU, Chenghua, Ningde, Fujian 352100 (CN); OUYANG, Shaocong, Ningde, Fujian 352100 (CN); XU, Baoyun, Ningde, Fujian 352100 (CN); HUANG, Xiaojian, Ningde, Fujian 352100 (CN); LIN, Yunmei, Ningde, Fujian 352100 (CN); YE, Yonghuang, Ningde, Fujian 352100 (CN)
(74) Representative: Gong, Jinping
(86) International application number: PCT/CN2022/093940
(87) International publication number: WO 2023/221055

(57) **Abstract**

This application provides a discharge method and discharge apparatus for battery, able to improve the discharge capability of batteries in low-temperature environments. The discharge method includes: obtaining a temperature of a battery; and determining, when the temperature of the battery is lower than a preset temperature threshold, to discharge the battery based on a first discharge current until the battery meets a preset condition, and then determining to discharge the battery based on a second discharge current, where the first discharge current is used for heating the battery during discharging, and the first discharge current is greater than the second discharge current.

## Description

### TECHNICAL FIELD

This application relates to the field of battery technologies, and in particular, to a discharge method and discharge apparatus for battery.

### BACKGROUND

With advantages such as high energy density, support of cyclic charging, safety, and environment friendliness, traction batteries are widely used in new energy vehicles, consumer electronics, energy storage systems, and other fields.

However, the use of traction batteries is limited in low-temperature environments. For example, the discharge capability of traction batteries seriously declines in low-temperature environments. Therefore, how the discharge capability of batteries in low-temperature environments is improved has become an urgent problem to be solved.

### SUMMARY

This application provides a discharge method and discharge apparatus for battery, able to improve the discharge capability of batteries in low-temperature environments.

According to a first aspect, a discharge method for battery is provided. The discharge method includes: obtaining a temperature of a battery; and determining, when the temperature of the battery is lower than a preset temperature threshold, to discharge the battery based on a first discharge current until the battery meets a preset condition, and then determining to discharge the battery based on a second discharge current, where the first discharge current is used for heating the battery during discharging, and the first discharge current is greater than the second discharge current.

In low-temperature environments, batteries have poor discharge capability, making it difficult to release the power in the batteries. In embodiments of this application, when the temperature of the battery is lower than the preset temperature threshold, the battery can be discharged based on the relatively large first discharge current so that the battery is heated during discharging, and after the temperature of the battery rises, the battery is discharged based on the relatively small second discharge current, thereby improving the discharge capability of the battery.

In an implementation, the determining, when the temperature of the battery is lower than a preset temperature threshold, to discharge the battery based on a first discharge current includes: when the temperature of the battery is lower than the temperature threshold and a SOC of the battery is greater than a preset SOC threshold, determining to discharge the battery based on the first discharge current.

In consideration that a low SOC may easily trigger extra risks in the battery, the foregoing SOC threshold can be set to ensure the safety of the battery. When the temperature of the battery is lower than the temperature threshold and the SOC of the battery is greater than the SOC threshold, it is determined that the battery is to be discharged based on the first discharge current so that the battery is heated during discharging, and this discharge continues until the battery meets a preset condition, and then it is determined that the battery is to be discharged based on a second discharge current.

In an implementation, the determining, when the temperature of the battery is lower than the temperature threshold and a SOC of the battery is greater than a preset SOC threshold, to discharge the battery based on a first discharge current includes: determining, when the temperature of the battery is lower than the temperature threshold, the SOC of the battery is greater than the SOC threshold, and discharge power of the battery needs to be increased, to discharge the battery based on the first discharge current.

When the battery is in a low-temperature environment and the SOC of the battery is not too low, if there is a request for large power output, a heating procedure is started, that is, the battery is discharged based on the first discharge current to increase the temperature of the battery, so as to improve the discharge capability of the battery, thereby meeting the requirement for large power output; and if there is no request for large power output, the heating procedure may not be started, and the battery is discharged based on the second discharge current, thereby improving energy utilization.

In an implementation, the preset condition includes that the temperature of the battery is higher than or equal to the temperature threshold and/or that the SOC of the battery is less than or equal to the SOC threshold.

When the battery is being discharged based on the first discharge current, the temperature of the battery gradually rises, and the SOC of the battery gradually decreases. When the temperature of the battery rises to the temperature threshold, a good enough discharge performance can be achieved. Therefore, there is no need to continue heating the battery, and the battery can now continue to be discharged based on the second discharge current. When the SOC of the battery decreases to the SOC threshold, to avoid triggering extra risks in the battery, heating of the battery can be stopped, and the battery continues to be discharged based on the second discharge current.

In an implementation, the first discharge current is at least one of a pulse current, a constant-voltage discharge current, and a constant-power discharge current, and the second discharge current is a direct current. When the battery is discharged in a way of pulse discharge, constant-voltage discharge, or constant-power discharge, heat produced by polarization of its cell can be effectively used for increasing the temperature of the battery.

In an implementation, a duty cycle of the pulse current is greater than or equal to 0.01 and less than or equal to 50.

In an implementation, the first discharge current is greater than or equal to 0.2C and less than or equal to 10C.

In an implementation, the discharge method is executed by a BMS of the battery.

According to a second aspect, a discharge apparatus for battery is provided. The discharge apparatus includes: a signal acquisition unit configured to obtain a temperature of a battery; and a processing unit configured to determine, when the temperature of the battery is lower than a preset temperature threshold, to discharge the battery based on a first discharge current until the battery meets a preset condition, and then determine to discharge the battery based on a second discharge current, where the first discharge current is used for heating the battery during discharging, and the first discharge current is greater than the second discharge current.

In an implementation, the processing unit is specifically configured to: determine, when the temperature of the battery is lower than the temperature threshold and a state of charge SOC of the battery is greater than a preset SOC threshold, to discharge the battery based on the first discharge current.

In an implementation, the preset condition includes that the temperature of the battery is higher than or equal to the temperature threshold and/or that the SOC of the battery is less than or equal to the SOC threshold.

In an implementation, the first discharge current is at least one of a pulse current, a constant-voltage discharge current, and a constant-power discharge current, and the second discharge current is a direct current.

In an implementation, a duty cycle of the pulse current is greater than or equal to 0.01 and less than or equal to 50.

In an implementation, the first discharge current is greater than or equal to 0.2C and less than or equal to 10C.

In an implementation, the discharge apparatus is a BMS of the battery.

According to a third aspect, a discharge apparatus for battery is provided. The discharge apparatus includes a memory and a processor, where the memory stores a computer program, and the processor is configured to invoke and run the computer program stored in the memory to cause the discharge apparatus to implement the discharge method according to the first aspect or any one of the implementations of the first aspect.

According to a fourth aspect, a computer-readable storage medium is provided, characterized by being configured for storing a computer program, where when the computer program is executed by a computing device, the computing device is caused to implement the discharge method according to the first aspect or any one of the implementations of the first aspect.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic flowchart of a discharge method for battery according to an embodiment of this application;
FIG. 2 is a schematic diagram of a waveform of a first discharge current according to an embodiment of this application;
FIG. 3 is a schematic diagram of a waveform of a first discharge current according to another embodiment of this application;
FIG. 4 is a schematic diagram showing a relationship between SOC and voltage of a battery during discharging;
FIG. 5 is a flowchart of a possible specific implementation of the discharge method shown in FIG. 1;
FIG. 6 is a schematic block diagram of a discharge apparatus according to an embodiment of this application; and
FIG. 7 is a schematic block diagram of a discharge apparatus according to another embodiment of this application.

### DESCRIPTION OF EMBODIMENTS

The following further describes implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

In the descriptions of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to particular orientations. These terms shall therefore not be construed as any limitation on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

For a battery, energy storage and discharge are implemented by migration of lithium ions Li⁺ between the positive and negative electrodes of the battery. However, the migration of Li⁺ between the positive and negative electrodes is greatly affected by temperature, especially in low-temperature environments. Due to factors such as the deterioration of kinetic conditions for the positive and negative electrodes of the battery, and increase in viscosity and decrease in conductivity of the electrolyte, performance of a lithium-ion battery would decline sharply, resulting in decreased discharge energy of the lithium-ion battery under low temperatures, causing problems such as poor power performance and small endurance mileage of an electric vehicle.

To avoid situations that power of a battery in an electric vehicle cannot be released normally in winter, this application proposes that when at a low temperature, the battery can be first discharged with a large current so that the battery is heated while being discharged, thus raising the temperature of the battery, and after that the battery is discharged with a normal current.

The battery in the embodiments of this application may be a traction battery, and the traction battery may be, for example, a lithium-ion battery, a lithium metal battery, a lead-acid battery, a nickel-cadmium battery, a nickel-metal hydride battery, a lithium-sulfur battery, a lithium-air battery, or a sodium-ion battery. In terms of scale, the traction battery may be a battery monomer which is also referred to as a cell, or it may be a battery module or a battery pack. This is not limited herein. In terms of application scenario, the traction battery can be used in motive apparatuses such as automobiles and ships, for example, used in a motor vehicle to power a motor of the motor vehicle as a power source for the electric vehicle. The traction battery can also power other electric devices in the electric vehicle, for example, powering a vehicular air conditioner, a vehicular player, and the like.

For ease of description, the following describes the solutions of this application by using an example in which the traction battery is used in a new energy vehicle (that is, a motor vehicle, or referred to as an electric vehicle).

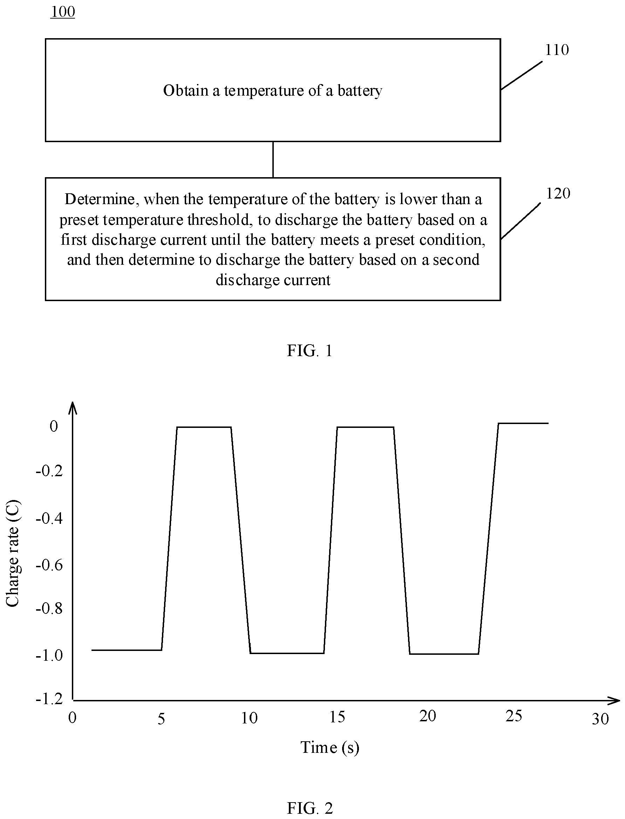

FIG. 1 is a schematic flowchart of a discharge method 100 for battery according to an embodiment of this application. The method 100 shown in FIG. 1 can be executed, for example, by a battery management system (Battery Management System, BMS) or other control modules of the battery. As shown in FIG. 1, the method 100 includes part or all of the following steps.

Step 110. Obtain a temperature of a battery.

Step 120. Determine, when the temperature of the battery is lower than a preset temperature threshold, to discharge the battery based on a first discharge current until the battery meets a preset condition, and then determine to discharge the battery based on a second discharge current.

The first discharge current is used for heating the battery during discharging, and the first discharge current is greater than the second discharge current.

In low-temperature environments, batteries have poor discharge capability, making it difficult to release the power in the batteries. In the embodiments of this application, when the temperature of the battery is lower than the preset temperature threshold, the battery can be discharged based on the relatively large first discharge current so that the battery is heated during discharging, and after the temperature of the battery rises, the battery is discharged based on the relatively small second discharge current, thereby improving the discharge capability of the battery.

For example, the first discharge current is at least one of a pulse current, a constant-voltage discharge current, and a constant-power discharge current, and the second discharge current is a direct current. When the battery is discharged in a way of pulse discharge, constant-voltage discharge, or constant-power discharge, heat produced by polarization of its cell can be effectively used for increasing the temperature of the battery. When the first discharge current is a pulse current, to be specific, the battery is discharged based on a pulse current, a peak value of the pulse current is larger than the second discharge current. When the first discharge current is a constant-voltage discharge current, meaning the battery is discharged in a way of constant-voltage discharge, the discharge current gradually decreases, and voltage of the battery is kept constant. When the first discharge current is a constant-power discharge current, meaning the battery is discharged in a way of constant-power discharge, the discharge current gradually increases, the voltage of the battery gradually decreases, and discharge power is kept constant. Certainly, the battery may alternatively be discharged in a combinational way where constant-power discharge is performed before constant-voltage discharge.

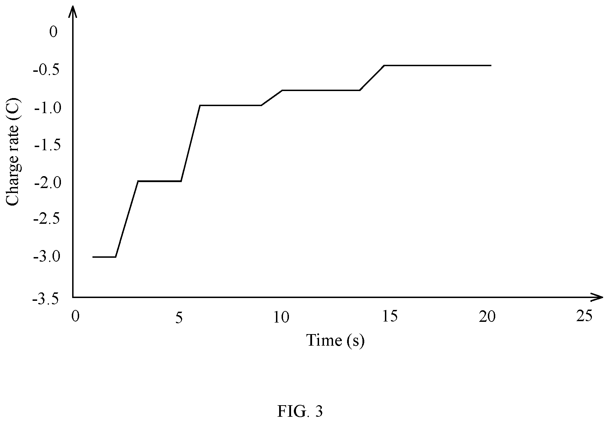

As an example, FIG. 2 and FIG. 3 illustrate two possible waveforms of a first discharge current. The first discharge current shown in FIG. 2 is a pulse current, where the horizontal coordinate represents discharge time, and the vertical coordinate represents discharge rate of the first discharge current. In each discharge cycle, the battery is discharged with a large pulse current for 5s and then rests for 5s. FIG. 3 illustrates changing in current during constant-voltage discharge, where the horizontal coordinate represents discharge time and the vertical coordinate represents discharge rate of the first discharge current. During discharging, the voltage is kept constant, and the discharge current gradually decreases. No matter which discharge way is used, an average discharge power in every discharge cycle is equal to a desired discharge power when the battery is discharged based on the first discharge current.

It should be understood that the first discharge current may be far greater than the second discharge current. For example, the first discharge current is greater than or equal to 0.2C and less than or equal to 10C, and preferably, a peak value of the first charge current is greater than or equal to 1C and smaller or equal to 5C. It can be understood that when the battery is discharged based on the second discharge current, little heat is produced, which is negligible. However, when the battery is discharged based on the first discharge current, the large-current discharge can result in a quick temperature rise of the battery. In an implementation, a duty cycle of the pulse current is greater than or equal to 0.01 and less than or equal to 50, preferably greater than or equal to 0.25 and less than or equal to 30.

In the embodiments of this application, when the battery is discharged based on the first discharge current with the foregoing parameter values, the temperature of the battery can rise from -20°C to 15°C in 30 min of discharge, implementing a quick temperature rise of the battery and increasing the depth of discharge (Depth of Discharge, DoD) of the battery from 80% to 90% within a unit time, thereby improving the discharge performance of the battery in low-temperature environments.

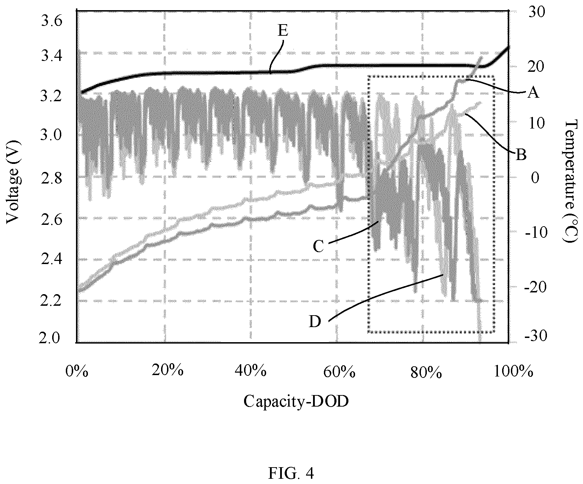

FIG. 4 illustrates a relationship between SOC and voltage of a battery during discharging under different discharge conditions. Specifically, as shown in a dashed box in FIG. 4, after the SOC of the battery is greater than 65%, the battery is discharged based on the first discharge current and the second discharge current separately, and voltages and temperatures are measured to obtain curve A, curve B, curve C, and curve D shown in the dashed box. As shown in the dashed box, curve A represents the changing of voltage with SOC when the battery is discharged based on the first discharge current, and curve B represents the changing of voltage with SOC when the battery is discharged based on the second discharge current. The second discharge current is a direct current, and the first charge current is a pulse current equivalent to the direct current. In FIG. 4, an example is used in which the second charge current is 0.5C and a pulse peak value of the first charge current is 2C. The first discharge current is a pulse current, and a corresponding voltage of the battery fluctuates. Therefore, when density of voltage sampling points is large enough, a result shown in curve A is presented. Curve E may be a SOC-OCV curve in a polarization-free case, which is drawn under a condition that polarization is eliminated after 2h resting every time 5% of power is discharged with a current of 0.05C, that is, a static SOC-OCV curve, or referred to as a lithiation potential curve. Curve C and curve D represent temperature risings of the battery when the battery is discharged based on the first charge current and when the battery is discharged based on the second charge current, respectively.

As shown in FIG. 4, an area of a region surrounded by curve A, curve E and the vertical coordinate axis represents power Q1 of discharge of the battery based on the first discharge current, and an area of a region surrounded by curve B, curve E and the vertical coordinate axis represents power Q2 of discharge of the battery based on the second discharge current. It can be seen from FIG. 4 that Q1 > Q2, where a difference between Q1 and Q2, that is, power Q1-Q2, is used for heating the battery. Therefore, it can be seen from curve C and curve D that when the battery is discharged based on the first discharge current, which is a large pulse current, the temperature rises quickly, so that the battery is quickly heated. It can be learned that when the battery is discharged based on a large pulse current, battery heating efficiency is high, but energy utilization is low, where only part of energy is output for driving of a vehicle and the like, and another part of energy is used for heat production of the battery.

Therefore, when the temperature of the battery is lower than the preset temperature threshold, the battery can be first discharged based on a high-rate current so that the battery is heated during discharging, and after the temperature of the battery rises, the battery continues to be discharged based on a normal low-rate current, thereby ensuring energy utilization during discharging of the battery. The battery being discharged based on the large-rate current quickly increases the temperature of the battery and increases the depth of discharge of the battery, thereby improving the discharge capability of the battery in low-temperature environments.

In an implementation, in step 120, the determining, when the temperature of the battery is lower than a preset temperature threshold, to discharge the battery based on a first discharge current includes: determining, when the temperature of the battery is lower than the temperature threshold and a state of charge (State of Charge, SOC) of the battery is greater than a preset SOC threshold, to discharge the battery based on the first discharge current.

In consideration that a low SOC may easily trigger extra risks in the battery, the foregoing SOC threshold may be set to ensure the safety of the battery. When the temperature of the battery is lower than the temperature threshold and the SOC of the battery is greater than the SOC threshold, it is determined that the battery is to be discharged based on the first discharge current so that the battery is heated during discharging, and this discharge continues until the battery meets a preset condition, and then it is determined that the battery is to be discharged based on a second discharge current.

Further, in an implementation, in step 120, the determining, when the temperature of the battery is lower than a temperature threshold and SOC of the battery is greater than a preset SOC threshold, to discharge the battery based on a first discharge current includes: determining, when the temperature of the battery is lower than the temperature threshold, the SOC of the battery is greater than the SOC threshold, and the discharge power of the battery needs to be increased, to discharge the battery based on the first discharge current.

In this case, the discharge power of the battery needs to be increased, meaning the battery needs large-power discharge. For example, an output power of the battery needs to be increased during acceleration of a vehicle. When the battery is in a low-temperature environment and the SOC of the battery is not too low, if there is a request for large power output, a heating procedure is started, that is, the battery is discharged based on the first discharge current to increase the temperature of the battery, so as to improve the discharge capability of the battery, thereby meeting the requirement for large power output; and if there is no request for large power output, for example, when the vehicle is running at a low speed all the time, the heating procedure may not be started, and the battery is discharged based on the second discharge current, thereby improving the energy utilization.

In an implementation, the preset condition includes that the temperature of the battery is higher than or equal to the temperature threshold and/or that the SOC of the battery is less than or equal to the SOC threshold.

When the battery is being discharged based on the first discharge current, the temperature of the battery gradually rises, and the SOC of the battery gradually decreases. When the temperature of the battery rises to the temperature threshold, a good enough discharge performance can be achieved. Therefore, there is no need to continue heating the battery, and the battery can now continue to be discharged with the second discharge current. When the SOC of the battery decreases to the SOC threshold, to avoid triggering extra risks in the battery, heating of the battery can be stopped, and the battery continues to be discharged based on the second discharge current. In other words, during discharging of the battery based on the first discharge current, after the temperature of the battery reaches the temperature threshold or the SOC decreases to the SOC threshold, discharging of the battery based on the first discharge current can be stopped, and the battery can continue to be discharged based on the second discharge current.

Certainly, if the temperature of the battery obtained in step 110 is higher than the temperature threshold, the battery may not be heated, and the battery is directly discharged based on the second discharge current. Alternatively, the SOC of the battery can be obtained. If the SOC is less than or equal to the SOC threshold, to ensure the safety of the battery, the battery may not be heated either, and the battery is directly discharged based on the second discharge current.

To be specific, when the battery is in a low-temperature environment and has a high SOC, a heating procedure can be started, that is, the battery is discharged based on the first discharge current to increase the temperature of the battery, thereby improving the discharge capability of the battery. When the battery has an appropriate temperature and a low SOC, no heating procedure is required or a started heating procedure should be ended, so that the battery is discharged based on the second discharge current.

In the embodiments of this application, the temperature threshold and the SOC threshold can be set and adjusted depending on actual application situations. For example, the temperature threshold may be in the range of -10°C to 10°C or -5°C to 5°C, for example, being 0°C. For another example, the SOC threshold may be in the range of 30% to 50%, for example, being 40%.

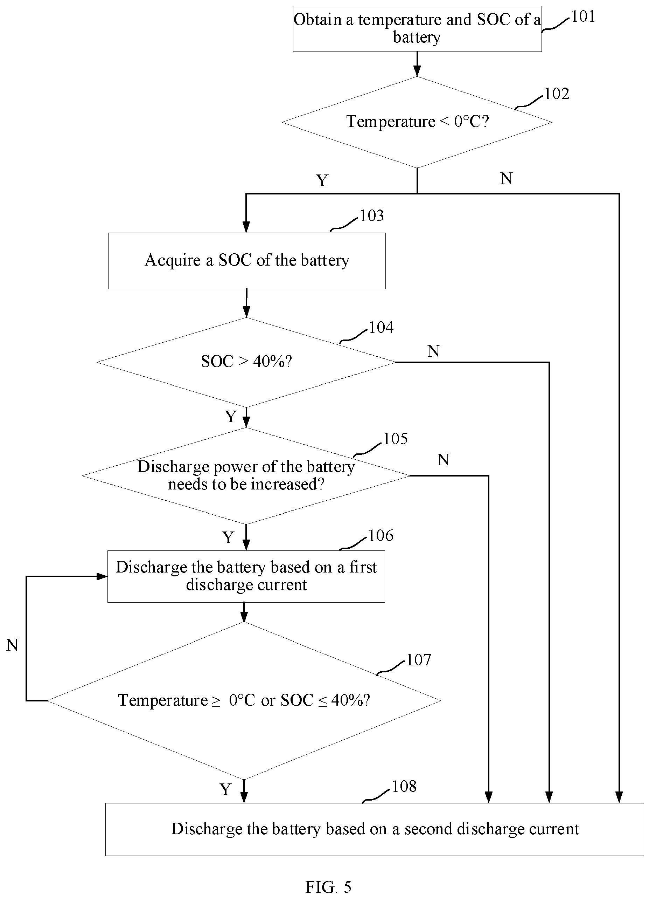

FIG. 5 is a flowchart of a possible specific implementation of the method 100 shown in FIG. 1. As shown in FIG. 5, assuming that the temperature threshold is 0°C and the SOC threshold is 40%, the method can be executed by a BMS and specifically includes the following steps.

Step 101. Obtain a temperature of a battery.

Step 102. Determine whether the temperature of the battery is lower than 0°C.

Step 103 to step 108 are performed if it is determined in step 102 that the temperature of the battery is lower than 0°C; and step 108 is directly performed without step 103 to step 107 if it is determined in step 102 that the temperature of the battery is higher than or equal to 0°C.

Step 103. Acquire a SOC of the battery.

Step 104. Determine whether or not the SOC of the battery is greater than 40%.

Step 105 is performed if it is determined in step 104 that the SOC of the battery is greater than 40%; and step 108 is directly performed without step 105 to step 107 if it is determined in step 104 that the SOC of the battery is less than or equal to 40%.

Step 105. Determine whether or not discharge power of the battery needs to be increased.

Step 106 is performed if the discharge power of the battery needs to be increased, and otherwise step 108 is directly performed without step 106 and step 107.

Step 106. Discharge the battery based on a first discharge current.

Step 107. Determine whether or not the temperature of the battery is higher than or equal to 0°C and whether or not the SOC of the battery is less than or equal to 40%.

During discharging of the battery based on the first discharge current, the temperature and SOC of the battery need to be monitored simultaneously. For example, the temperature and SOC of the battery are measured according to a specified period. In addition, whether or not the temperature of the battery is higher than or equal to 0°C and whether or not the SOC of the battery is less than or equal to 40% are determined.

Step 108 is performed if the measured temperature of the battery reaches 0°C or its SOC is as low as 40%.

Step 108. Discharge the battery based on a second discharge current.

It can be learned that with use of the discharge policy in the embodiments of this application, in low-temperature environments, the battery is discharged based on the first discharge current so that the battery is heated, and thus the battery can reach a normal temperature as soon as possible, thereby improving the discharge capability thereof.

In the embodiments of this application, after the BMS determines an appropriate discharge policy based on information such as the temperature and/or SOC of the battery, a control signal can be output to a corresponding charge/discharge circuit, so that the battery can be discharged based on different discharge currents via the charge/discharge circuit.

To further improve the discharge capability of the battery, optionally, a positive electrode of the battery may be made of lithium iron phosphate (LFP) with a small particle size, and/or an electrolyte with a high conductivity is used, thereby improving the discharge capability of the battery. For example, a particle size range of the LFP is 100 nm to 2000 nm, preferably 100 nm to 800 nm. For another example, a conductivity range of the electrolyte is 8 s/m to 24 s/m, preferably 6 s/m to 18 s/m.

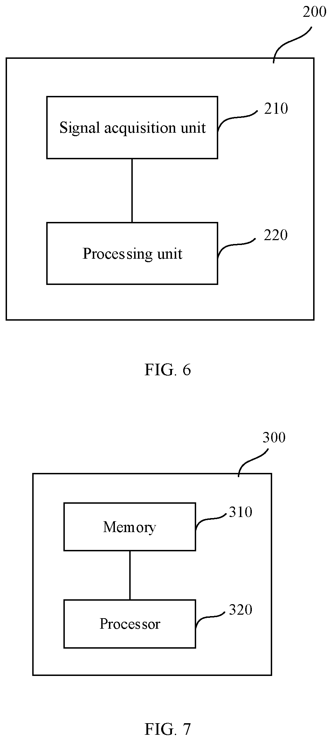

As shown in FIG. 6, this application further provides a discharge apparatus 200 for battery. The discharge apparatus 200 may be, for example, a BMS of a battery. As shown in FIG. 6, the discharge apparatus 200 includes a signal acquisition unit 210 and a processing unit 220. The signal acquisition unit 210 is configured to obtain a temperature of the battery. The processing unit 220 is configured to determine, when the temperature of the battery is lower than a preset temperature threshold, to discharge the battery based on a first discharge current until the battery meets a preset condition, and then determine to discharge the battery based on a second discharge current, where the first discharge current is used for heating the battery during discharging, and the first discharge current is greater than the second discharge current.

In an implementation, the processing unit 220 is specifically configured to: determine, when the temperature of the battery is lower than the temperature threshold and a state of charge SOC of the battery is greater than a preset SOC threshold, to discharge the battery based on the first discharge current.

In an implementation, the preset condition includes that the temperature of the battery is higher than or equal to the temperature threshold and/or that the SOC of the battery is less than or equal to the SOC threshold.

In an implementation, the first discharge current is at least one of a pulse current, a constant-voltage discharge current, and a constant-power discharge current, and the second discharge current is a direct current.

In an implementation, a duty cycle of the pulse current is greater than or equal to 0.01 and less than or equal to 50.

In an implementation, the first discharge current is greater than or equal to 0.2C and less than or equal to 10C.

As shown in FIG. 7, this application further provides a discharge apparatus 300 for battery, including a memory 310 and a processor 320, where the memory 310 is configured to store a computer program, and the processor 320 is configured to invoke and run the computer program stored in the memory to cause the discharge apparatus 300 to implement the discharge method according to any one of the foregoing embodiments.

This application further provides a computer-readable storage medium characterized by being configured for storing a computer program, where when the computer program is executed by a computing device, the computing device is caused to implement the discharge method according to any one of the forgoing embodiments.

This application further provides a power apparatus. The power apparatus includes a traction battery and the charge apparatus according to any one of the forgoing embodiments, where the charge apparatus is configured to charge the traction battery.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It will be clearly understood by persons skilled in the art that, for ease and brevity of description, for a detailed operating process of the foregoing system, apparatus, or unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely illustrative. For example, the unit division is merely logical function division and other division manners may be used in actual implementation. For example, a plurality of units or components may be combined or integrated into another system, or some features may be ignored or not be performed. In addition, the displayed or discussed mutual couplings, direct couplings or communication connections may be indirect couplings or communication connections through some interfaces, apparatuses or units, and may be in electrical, mechanical, or other forms.

The units described as separate parts may or may not be physically separate. Parts displayed as units may or may not be physical units, meaning they may be located in one position or distributed on a plurality of network units. Some or all of the units may be selected depending on actual requirements to achieve the objectives of the solutions of the embodiments.

## Claims

1. A discharge method for battery, **characterized in that** the discharge method comprises:
obtaining a temperature of a battery; and
determining, when the temperature of the battery is lower than a preset temperature threshold, to discharge the battery based on a first discharge current until the battery meets a preset condition, and then determining to discharge the battery based on a second discharge current, wherein the first discharge current is used for heating the battery during discharging, and the first discharge current is greater than the second discharge current.

2. The discharge method according to claim 1, **characterized in that** the determining, when the temperature of the battery is lower than a preset temperature threshold, to discharge the battery based on a first discharge current comprises:
determining, when the temperature of the battery is lower than the temperature threshold and a state of charge SOC of the battery is greater than a preset SOC threshold, to discharge the battery based on the first discharge current.

3. The discharge method according to claim 2, **characterized in that** the determining, when the temperature of the battery is lower than the temperature threshold and a state of charge SOC of the battery is greater than a preset SOC threshold, to discharge the battery based on the first discharge current comprises:
determining, when the temperature of the battery is lower than the temperature threshold, the SOC of the battery is greater than the SOC threshold, and discharge power of the battery needs to be increased, to discharge the battery based on the first discharge current.

4. The discharge method according to claim 2 or 3, **characterized in that** the preset condition comprises that the temperature of the battery is higher than or equal to the temperature threshold and/or that the SOC of the battery is less than or equal to the SOC threshold.

5. The discharge method according to any one of claims 1 to 4, **characterized in that** the first discharge current is at least one of a pulse current, a constant-voltage discharge current, and a constant-power discharge current, and the second discharge current is a direct current.

6. The discharge method according to claim 5, **characterized in that** a duty cycle of the pulse current is greater than or equal to 0.01 and less than or equal to 50.

7. The discharge method according to any one of claims 1 to 6, **characterized in that** the first discharge current is greater than or equal to 0.2C and smaller than or equal to 10C.

8. The discharge method according to any one of claims 1 to 7, **characterized in that** the discharge method is executed by a battery management system BMS of the battery.

9. A discharge apparatus for battery, **characterized by** comprising:
a signal acquisition unit configured to obtain a temperature of a battery; and
a processing unit configured to determine, when the temperature of the battery is lower than a preset temperature threshold, to discharge the battery based on a first discharge current until the battery meets a preset condition, and then determine to discharge the battery based on a second discharge current, wherein the first discharge current is used for heating the battery during discharging, and the first discharge current is greater than the second discharge current.

10. The discharge apparatus according to claim 9, **characterized in that** the processing unit is specifically configured to:
determine, when the temperature of the battery is lower than the temperature threshold and a state of charge SOC of the battery is greater than a preset SOC threshold, to discharge the battery based on the first discharge current.

11. The discharge apparatus according to claim 10, **characterized in that** the processing unit is specifically configured to:
determine, when the temperature of the battery is lower than the temperature threshold, the SOC of the battery is greater than the SOC threshold, and discharge power of the battery needs to be increased, to discharge the battery based on the first discharge current.

12. The discharge apparatus according to claim 10 or 11, **characterized in that** the preset condition comprises that the temperature of the battery is higher than or equal to the temperature threshold and/or that the SOC of the battery is less than or equal to the SOC threshold.

13. The discharge apparatus according to any one of claims 10 to 12, **characterized in that** the first discharge current is at least one of a pulse current, a constant-voltage discharge current, and a constant-power discharge current, and the second discharge current is a direct current.

14. The discharge apparatus according to claim 13, **characterized in that** a duty cycle of the pulse current is greater than or equal to 0.01 and less than or equal to 50.

15. The discharge apparatus according to any one of claims 10 to 14, **characterized in that** the first discharge current is greater than or equal to 0.2C and smaller than or equal to 10C.

16. The discharge apparatus according to any one of claims 10 to 15, **characterized in that** the discharge apparatus is a battery management system BMS of the battery.

17. A discharge apparatus for battery, **characterized by** comprising a memory and a processor, wherein the memory stores computer instructions, and the processor invokes the computer instructions to cause the discharge apparatus to implement the discharge method according to any one of claims 1 to 8.

18. A computer-readable storage medium, **characterized by** being configured for storing a computer program, wherein when the computer program is executed by a computing device, the computing device is caused to implement the discharge method according to any one of claims 1 to 8.
